**Europäisches Patentamt**

**European Patent Office**

**Office européen des brevets**

(11) Publication number: **0 084 729 B1**

(12) **EUROPEAN PATENT SPECIFICATION**

(45) Date of publication of patent specification: **02.03.88**

(21) Application number: **82306843.2**

(22) Date of filing: **21.12.82**

(51) Int. Cl.⁴: **B 41 M 5/24, G 11 B 7/24**

(54) **Recording elements.**

(30) Priority: **22.12.81 JP 207862/81**

(43) Date of publication of application:
**03.08.83 Bulletin 83/31**

(45) Publication of the grant of the patent:
**02.03.88 Bulletin 88/09**

(84) Designated Contracting States:
**DE FR GB NL**

(56) References cited:
**EP-A-0 015 141**
**EP-A-0 023 809**
**DD-A- 149 277**
**DE-A-2 939 524**
**GB-A-2 005 155**
**US-A-4 195 313**
**US-A-4 241 355**

(73) Proprietor: **FUJITSU LIMITED**
**1015, Kamikodanaka Nakahara-ku**
**Kawasaki-shi Kanagawa 211 (JP)**

(72) Inventor: **Goto, Yasuyuki**
**2958, Noborito Tama-ku**
**Kawasaki-shi Kanagawa 214 (JP)**
Inventor: **Koshino, Nagaaki**
**31-2-404, Hirakata-cho Kanazawa-ku**
**Yokohama-shi Kanagawa 236 (JP)**
Inventor: **Ogawa, Seiya**
**216-54, Ooba-cho Midori-ku**
**Yokohama-shi Kanagawa 227 (JP)**
Inventor: **Goto, Hironori**
**Shibuya-so 101 1194, Mita**
**Atsugi-shi Kanagawa 243 (JP)**
Inventor: **Ogawa, Koichi Nichimo Hiyoshi Dai-3**
**Coporasu 102**
**1703-2, Hiyoshihon-cho**
**Yokohama-shi Kanagawa 223 (JP)**

(74) Representative: **Silverman, Warren et al**
**HASELTINE LAKE & CO. Hazlitt House 28**
**Southampton Buildings Chancery Lane**
**London WC2A 1AT (GB)**

Courier Press, Leamington Spa, England.

# 0 084 729

**Description**

Recording elements

The present invention relates to a recording element. More specifically, it relates to a recording element suitable for use in an optical disc having a high photosensitivity and a high signal-to-noise (S/N) ratio.

Recent rapid progress in optical techniques has led to the development and use of optical discs capable of recording information at a high recording density. In the art, information is recorded in a recording layer formed on the surface of a substrate by using laser beams or other photobeams to open information holes (i.e. pits) in the layer. The recorded information is read out (or detected), based on the presence or absence of pits in the recording layer, by irradiating a photobeam to the recording layer.

The known recording media for use in optical discs (below, "the recording medium or media") comprises a thin film of a simple substance such as bismuth (Bi), aluminum (Al) or tellurium (Te) formed as a recording layer on the surface of a substrate by, for example, a standard vapor deposition technique, possibly with interposition of a subbing layer of a dielectric material. It is generally required that the photobeam should be incident upon the recording layer. One recording element of this type is described in EP—A—0 015 141 and comprises a substrate impermeable to radiation, an inner metallic layer made of Al or any other metal, a light absorptive dielectric layer made of SiO or a sublimable material and an outer semi-transparent metallic layer likewise made of Al or another material. A variant of this type of structure described in US—A—4,195,313 has a photobeam incident upon a thin layer of light absorptive organic material made of fluorescein followed by a transparent $SiO_2$-layer through which light is transmitted and reflected back at an inner metallic layer overlying a substrate so that the organic material is ablated by the combination of incident and reflected light. Furthermore EP—A—0 023 809, which is taken into account in the preambles of claims 1 and 8, discloses a recording element having a radiation transmissible substrate, a recording material comprising at least one metal layer and at least one radiation transmissible subbing layer laminated therebetween.

These conventional recording media, however, have several disadvantages. First, existing semiconductor lasers, which have relatively small power, cannot easily be used for the recording of information from the viewpoint of the photosensitivity. Second, the media's (S/N) ratio is low, making information difficult to reproduce at a high quality. For instance, when information is recorded at an optical disc speed of 1800 rpm in a recording layer composed of Te formed on a poly(methyl methacrylate) substrate using a laser beam having a power of 17 to 18 mW at the surface of the optical disc, the S/N ratio of the reproducing signal at a band width of 10 MHz is at most 38 dB.

It is desirable to eliminate the above-mentioned disadvantages of the prior art and to provide a recording element capable of recording information at a high quality (i.e. a high S/N ratio) and at a high photosensitivity (i.e. by using a photobeam having a relatively low power).

Other objects and advantages of the present invention will be apparent from the following description.

In accordance with one aspect of the present invention, there is provided a recording element suitable for writing and reading out information by irradiating a photobeam on a recording layer, comprising a radiation transmissible substrate, a recording medium comprising at least one metal layer and a radiation transmissible subbing layer laminated between said substrate and said metal layer, wherein at least one metal layer consists of one of the metals Te, Bi, In, Se, As, Pb, Sn or any alloy therefrom or any mixture thereof, said subbing layer is composed of a radiation transmissible inorganic material and said recording medium comprises additionally a sublimable organic substance layer which underlies said metal layer and in which the sublimable organic substance is copper phthalocyanine, fluorescein or lead phthalocyanine, or any mixture thereof, with the melting point of the metal layer being lower than the melting point of the radiation transmissible inorganic material of the subbing layer and the sublimation point of the sublimable organic substance layer being within a range of ±20% of the melting point of the metal of said metal layer.

In accordance with another aspect of the present invention, there is also provided a recording element suitable for writing and reading out information by irradiating a photobeam on a recording layer, comprising a radiation transmissible substrate, a recording medium comprising at least one metal layer and a radiation transmissible subbing layer laminated between said substrate and said metal layer, said recording medium comprising additionally a sublimable organic substance layer which underlies said metal layer and a second metal layer laminated between said subbing layer and said sublimable organic substance layer, said at least one metal layer and said second metal layer each consisting of one of the metals Te, Bi, In, Se, As, Pb, Sn or any alloy therefrom or any mixture thereof, and said subbing layer being composed of a radiation transmissible inorganic material, in which recording medium the sublimable organic substance is copper phthalocyanine, fluorescein or lead phthalocyanine, or any mixture thereof, with the melting point of the metal layer being lower than the melting point of the radiation transmissible inorganic material of the subbing layer and the sublimation point of the sublimable organic substance layer being within a range of ±20% of the melting point of the metal of said metal layer.

The present invention will be better understood from the description set forth below with reference to the accompanying drawings, in which:

Figure 1 is a schematic sectional view illustrating the structure of the first preferred embodiment of the recording element of the present invention;

2

Figure 2 is a schematic sectional view illustrating the structure of the second preferred embodiment of the recording element of the present invention;

Figure 3 is a partially cut-away schematic perspective view illustrating the structure of an optical disc including the recording elements of the present invention;

Figures 4(a) and (b) are schematic drawings illustrating the state of the pit when information is recorded in a conventional recording layer comprising a polymethyl methacrylate substrate and a Te layer; and

Figures 5(a) and (b) are schematic drawings illustrating the state of the pit when information is recorded in the present recording element comprising a polymethyl methacrylate substrate, a silicon oxide (SiO) subbing layer, a first Te layer, a copper phthalocyanine layer, and a second Te layer.

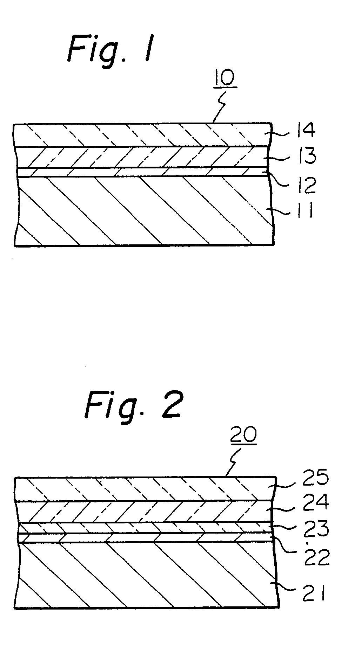

As illustrated in Figure 1, the recording element 10 according to the first embodiment of the present invention comprises, on a radiation (or light) transmissible substrate 11 and a radiation (or light) transmissible subbing layer 12, a sublimable organic substance layer 13 and a metal layer 14.

As illustrated in Figure 2, the recording element 20 according to the second embodiment of the present invention comprises, on a radiation transmissible substrate 21 and a radiation transmissible subbing layer 22, a first metal layer 23, a sublimable organic substance layer 24, a second metal layer 25.

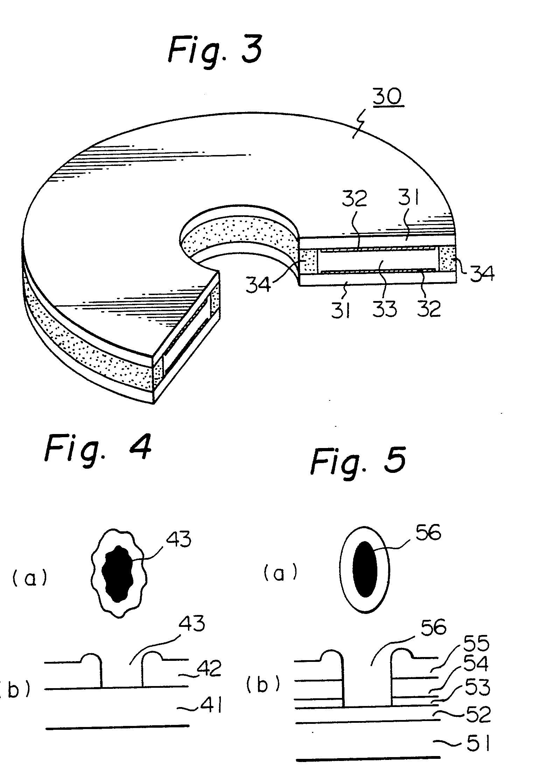

These recording elements can be assembled, as a so-called air sandwich type optical disc 30, as shown in Figure 3. The optical disc 30 comprised radiation transmissible substrates 31, recording media 32, and spacers 34 (subbing layers are not shown in Figure 3). Reference numeral 33 represents an air layer enclosed with the substrates 31 and spacers 34.

The radiation transmissible (or transparent) substrates 11 and 21 can be formed by any radiation transmissible synthetic resin, such as poly methyl methacrylate, polycarbonate, poly vinyl chloride, and polystyrene. The use of the synthetic resin's smaller thermal conductivity leads to higher sensitivity in the resultant recording medium.

The radiation transmissible (or transparent) subbing layers 12 and 22 can be composed of any radiation transmissible inorganic materials having a melting point higher than that of the metal of the layers 14, 23 and 25. Typical examples of such inorganic materials are SiO, $SiO_2$, $MgF_2$, and $Al_2O_3$. The radiation transmissible subbing layers 12 and 22 can be readily formed on the surface of the substrates 11 and 21 by any known vapor deposition technique. Although there is no limitation on the thickness of the subbing layers 12 and 22, the thickness is generally 3 nm or more, desirably 5 to 15 nm. The use of the subbing layers 12 and 22 in the recording media 10 and 20 results in a high sensitivity in the reproduction signal. The use of the subbing layers 12 and 22 of too large thickness reduces the sensitivity. For instance, the sensitivity with a subbing layer of a thickness of 100 nm decreases by about 20% as compared with one of a thickness of 10 nm. It is believed that this decrease in sensitivity is caused by the rapid release of heat supplied by a photobeam through the subbing layer 12 and 22, of which the thermal conductivity is higher than that of the substrate material.

The sublimable organic substance layers 13 and 24 are composed of sublimable organic substances having a sublimation point within the range of ±20% from the melting point of the metal, specifically copper phthalocyanine having a sublimation point of 420°C to 430°C, fluorescein having a sublimation point of 314°C to 316°C, and lead phthalocyanine having a sublimation point of 450°C to 500°C as well as mixtures of these substances. The sublimable organic substance layers 13 and 24 can be readily formed on the subbing layer 12 and the metal layer 22, respectively, by any known vapor deposition technique. Although there is no limitation on the thickness of the organic substance layers 13 and 24, the thickness is generally 5 nm or more, desirably 10 to 100 nm. The use of the organic layers 13 and 24 assists the smooth melting and hole-opening of the metal layers 14 and 25 when information is written in the recording layer by irradiating a photobeam on the recording layer. Use of the organic layers 13 and 24 having too large a thickness tends to result in the decrease in sensitivity and the S/N ratio of the recording layer.

The metal layers 14, 23 and 25 are composed of metals having a relatively low melting point (i.e. 1000°C or less) and a relatively low thermal conductivity (i.e. 0.1 cal/sec.cm.deg. or less). Specifically, the metals to use are Te (m.p. 450°C), Bi (m.p. 271°C), In (m.p. 157°C), Se (m.p. 221°C), As (m.p. 612°C), Pb (m.p. 327°C), and Sn (m.p. 232°C). Any alloys obtained therefrom and any mixtures thereof can also be used. The metal layers 14 and 25 and 23 can be readily formed on the organic substance layers 13 and 24 and the subbing layer 22, respectively, by any known vapor deposition technique. Although there is no limitation on the thickness of the metal layers 14, 23 and 25, the thickness is generally 5 nm or more, desirably 10 to 100 nm. Use of the metal layers 14 and 25 having too large a thickness necessitates a large amount of light energy for melting the metal to open pits. Use of the metal layer 23 further improves the photosensitivity of the recording medium and also results in a better S/N ratio when the recorded information is reproduced.

According to the present invention, a recording medium having a high photosensitivity when information is recorded and having a high S/N ratio when the information is reproduced can be provided. It is believed that the high photosensitivity of the recording elements according to the present invention can be obtained because of the high evaporation ability of the sublimable organic substance in the organic substance layers 13 and 24 which assists or accelerates the melting and removal of the metal at the desired portions in the metal layers 14 and 25, the evaporation resulting from the heat derived from the irradiation of the photobeam at the recording of the information at the desired portions in the metal layers 14 and 25. This efficiency is also assisted by the low thermal conductivity of the organic substance because the heat

3

derived from the irradiation of the photobeam is not released through the organic substance layers 13 and 24. Furthermore, the photosensitivity of the recording medium is further improved when it has a laminated structure such that the organic substance layer 24 is sandwiched between two metal layers 23 and 25. The presence of the additional metal layer 23 enables the high evaporation and sublimation abilities of the organic substance to be completely exhibited.

It is also believed that the high quality (or S/N ratio) of the reproduction signal of the recording elements according to the present invention can be obtained because smooth information holes (or pits) can be formed due to the presence of the inorganic material subbing layer 12 or the presence of the inorganic material subbing layer 22 and the metal layer 23. For instance, as schematically illustrated in Figures 4(a) and (b), when information is written in a recording medium comprising a Te layer 42 in a poly methyl methacrylate substrate 41 by the irradiation of a photobeam, an information hole (i.e. a pit) 43 having an irregular profile is opened. Contrary to this, as schematically illustrated in Figures 5(a) and (b), when information is written on the present recording element comprising a poly methyl methacrylate substrate 51, a SiO subbing layer 52, a Te layer 53, a copper phthalocyanine layer 54, and a Te layer 55, an information hole (i.e. a pit) 56 having a smooth and regular profile is opened. These profiles were determined by micrographs. It is believed that the smooth profile of a pit 56 can be advantageously obtained by the action of the interfacial tension of the inorganic material subbing layer 52 and the molten metal layer 53.

Examples

The present invention will now be further illustrated by, but is by no means limited to, the following examples.

Example 1

A poly methyl methacrylate substrate having a diameter of 300 mm and having a thickness of 1.2 mm was placed, after washing, in a bell-jar. SiO in a boat located in the bell-jar was heated under a pressure of $10^{-6}$ Torr, while the substrate was turned at a speed of 120 rpm, to deposit a SiO layer having a thickness of 5 nm on the surface of the substrate.

Then, Te in a boat located in the bell-jar was heated under a pressure of $10^{-6}$ Torr, while the deposited substrate was turned at a speed of 120 rpm, to deposit a Te layer having a thickness of 5 nm on the surface of the SiO layer.

Thereafter, copper phthalocyanine in a boat located in the bell-jar was heated under a pressure of $10^{-6}$ Torr, while the deposited substrate was turned at a speed of 120 rpm, to deposit a copper phthalocyanine layer on the Te layer.

Finally, a Te layer having a thickness of 20 nm was deposited on the copper phthalocyanine layer in the same manner as described above.

As a Comparative Example, a Te layer having a thickness of 20 nm was deposited on the surface of a poly methyl methacrylate substrate used above.

The recording and reading out tests were effected in the resultant recording elements. The results are shown in Table 1 below.

TABLE 1

| No. | Speed of optical disc (rpm) | Power of laser beam (mW) | S/N ratio of reproduction signal (dB) |
|---|---|---|---|
| Example 1 | 600 | 4.5 | 40 |
| | 1800 | 10.5 | 46 |
| Comparative Example | 600 | 7.5 | 34 |
| | 1800 | 17—18 | 38 |

Example 2

A recording element comprising, in this order, a poly methyl methacrylate substrate having a thickness of 1.2 mm, a SiO layer having a thickness of 10 nm, a copper phthalocyanine having a thickness of 20 nm, and a Te layer having a thickness of 19 nm was prepared in the same manner as in Example 1.

The recording and reading out tests were carried out at a speed of the optical disc of 600 rpm. The results are shown in Table 2.

## TABLE 2

| Speed of optical disc (rpm) | Power of laser beam (mW) | S/N ratio of reproduction signal (dB) |
| --- | --- | --- |
| 600 | 6 | 38 |

Examples 3 to 5

Recording elements were prepared in the same manner as described in Example 1, except that the metal layer and the organic substance layer were changed as listed in Table 3.

The recording and reading out tests were carried out in the same manner as in Example 1. The results are shown in Table 3.

## TABLE 3

| Example No. | Metal layer (nm) | Sublimable organic substance layer (nm) | Power of laser beam (mW) | S/N ratio of reproduction signal (dB) |
| --- | --- | --- | --- | --- |
| 3 | Te (20) | Fluorescein (15) | 7.0 | 40 |
| 4 | Bi (20) | Fluorescein (15) | 10.0 | 33 |
| 5 | Bi (20) | Copper phthalocyanine (15) | 7.5 | 35 |

## Claims

1. A recording element suitable for writing and reading out information by irradiating a photo beam on a recording layer, comprising a radiation transmissible substrate (11, 21), a recording medium comprising at least one metal layer (14, 25) and a radiation transmissible subbing layer (12, 22) laminated between said substrate (11, 21) and said metal layer (14, 25), characterised in that said at least one metal layer (14, 25) consists of one of the metals Te, Bi, In, Se, As, Pb, Sn or any alloy therefrom or any mixture thereof, that said subbing layer (12, 22) is composed of a radiation transmissible inorganic material, and that said recording medium comprises additionally a sublimable organic substance layer (13, 24) which underlies said metal layer (14, 25) and in which the sublimable organic substance is copper phthalocyanine, fluorescein or lead phthalocyanine, or any mixture thereof, with the melting point of the metal layer (14, 25) being lower than the melting point of the radiation transmissible inorganic material of the subbing layer (12, 22) and the sublimation point of the sublimable organic substance layer (13, 24) being within a range of ±20% of the melting point of the metal of said metal layer (14, 25).

2. A recording element as claimed in Claim 1 wherein the substrate (11, 21) is composed of a synthetic resin.

3. A recording element as claimed in Claim 2, wherein the synthetic resin is polymethyl methacrylate, polycarbonate, polyvinyl chloride, or polystyrene. .

4. A recording element as claimed in any preceding claim, wherein the inorganic material is SiO, $SiO_2$, $MgF_2$, $Al_2O_3$, or any mixture thereof.

5. A recording element as claimed in any preceding claim, wherein the thickness of the subbing layer (12, 22) is 3 nm or more.

6. A recording element as claimed in any preceding claim, wherein the thickness of the sublimable organic substance layer (13, 24) is 5 nm or more.

7. A recording element as claimed in any preceding claim, wherein the thickness of the metal layer (14, 25) is 5 nm or more.

8. A recording element suitable for writing and reading out information by irradiating a photo beam on a recording layer, comprising a radiation transmissible substrate (21), a recording medium comprising at least one metal layer (25) and a radiation transmissible subbing layer (22) laminated between said substrate (11, 21) and said metal layer (14, 25) characterised in that said recording medium comprises additionally a sublimable organic substance layer (24) which underlies said metal layer (25) and a second metal layer (23) laminated between said subbing layer (22) and said sublimable organic substance layer (24), said at least one metal layer (25) and said second metal layer (23) each consisting of one of the metals Te, Bi, In, Se, As, Pb, Sn or any alloy therefrom or any mixture thereof and that said subbing layer (22) being composed of a radiation transmissible inorganic material, in which recording medium the sublimable organic substance is copper phthalocyanine, fluorescein or lead phthalocyanine, or any mixture thereof, with the melting point of the metal layer (25) being lower than the melting point of the radiation transmissible inorganic material of the subbing layer (22) and the sublimation point of the sublimable organic substance layer (24) being within a range of ±20% of the melting point of the metal of said metal layer (25).

9. A recording element as claimed in Claim 8, wherein the substrate (21) is composed of a synthetic resin.

10. A recording element as claimed in Claim 9, wherein the synthetic resin is polymethyl methacrylate or polycarbonate, polyvinyl chloride, or polystyrene.

11. A recording element as claimed in Claim 8, 9 or 10, wherein the inorganic material is SiO, $SiO_2$, $MgF_2$, $Al_2O_3$, or any mixture thereof.

12. A recording element as claimed in any one of Claims 8 to 11, wherein the thickness of the subbing layer (22) is 3 nm or more.

13. A recording element as claimed in any one of Claims 8 to 12, wherein the thickness of the sublimable organic substance layer (24) is 5 nm or more.

14. A recording element as claimed in any one of Claims 8 to 13, wherein the thickness of the first metal layer (25) is 3 nm or more.

15. A recording element as claimed in any one of Claims 8 to 14, wherein the thickness of the second metal layer (23) is 5 nm or more.

**Patentansprüche**

1. Aufzeichnungselement, das zum Schreiben und Auslesen von Information durch Einstrahlen eines Fotostrahls auf eine Aufzeichnungsschicht geeignet ist, mit einem strahlungsdurchlässigen Substrat (11, 21), einem Aufzeichnungsmedium, das wenigstens eine Metallschicht (14, 25) umfaßt, und einer bestrahlungsdurchlässige Unterschicht (12, 22), die zwischen dem genannten Substrat (11, 21) und der genannten Metallschicht (14, 25) laminiert ist, dadurch gekennzeichnet, daß die genannte wenigstens eine Metallschicht (14, 25) aus einem der Metalle Te, Bi, In, Se, As, Pb, Sn oder einer Legierung davon oder irgend einer Mischung daraus besteht, daß die genannte Unterschicht (12, 22) aus einem strahlungsdurchlässigen anorganischen Metall zusammengesetzt ist, und daß das genannte Aufzeichnungsmedium zusätzlich eine aus organischer Substanz bestehende sublimierbare Schicht (13, 24) umfaßt, welche unter der genannten Metallschicht (14, 25) liegt und in der die sublimierbare organische Substanz Kupferphthalozyanin, Fluoreszein oder Bleiphthalozyanin, oder irgend eine Mischung daraus ist, wobei der Schmelzpunkt der Metallschicht (14, 25) niedriger als der Schmelzpunkt des strahlungsdurchlässigen anorganischen Material der Unterschicht (12, 22) ist und der Sublimationspunkt der Schicht (13, 24) aus sublimierbarer organischer Substanz im Bereich von ±20% des Schmelzpunktes des Metalls der genannten Metallschicht (14, 25) liegt.

2. Aufzeichnungselement nach Anspruch 1, bei dem das Substrat (11, 21) aus einem synthetischen Harz besteht.

3. Aufzeichnungselement nach Anspruch 2, bei dem das synthetische Harz ein Polymethylmethacrylat, Polycarbonat, Polyvinylchlorid oder Polystyrol ist.

4. Aufzeichnungselement nach einem der vorhergehenden Ansprüche, bei dem das anorganische Material SiO, $SiO_2$, $MgF_2$, $Al_2O_3$ oder irgend eine Mischung davon ist.

5. Aufzeichnungselement nach einem der vorhergehenden Ansprüche, bei dem die Dicke der Unterschicht (12, 22) 3 nm oder mehr beträgt.

6. Aufzeichnungselement nach einem der vorhergehenden Ansprüche, bei dem die Dicke der Schicht (13, 24) aus sublimierbarer organischer Substanz 5 nm oder mehr beträgt.

7. Aufzeichnungselement nach einem der vorhergehenden Ansprüche, bei dem die Dicke der Metallschicht (14, 25) 5 nm oder mehr beträgt.

8. Aufzeichnungselement, geeignet zum Schreiben und zum Auslesen von Information durch Einstrahlung eines Fotostrahls auf eine Aufzeichnungsschicht, mit einem strahlungsdurchlässigen Substrat (21), einem Aufzeichnungsmedium, das wenigstens eine Metallschicht (25) umfaßt, und einer strahlungsdurchlässigen Unterschicht (22), die zwischen dem genannten Substrat (11, 21) und der genannten Metallschicht (14, 25) laminiert ist, dadurch gekennzeichnet, daß das genannte Aufzeichnungsmedium zusätzlich eine Schicht (24) aus sublimierbarer organischer Substanz umfaßt, die unter der genannten Metallschicht (25) liegt, und eine zweite Metallschicht (23), die zwischen der genannten Unterschicht (22) und der genannten Schicht (24) aus sublimierbarer organischer Substanz laminiert ist, wobei die wenigstens eine Metallschicht (25) und die genannte zweite Metallschicht (23) jeweils aus einem der Metalle Te, Bi, In, Se, As, Pb, Sn oder einer Legierung aus diesen oder irgendeiner Mischung aus diesen besteht und daß die genannte Unterschicht (22) aus einem strahlungsdurchlässigen anorganischen Material besteht, in welchem Aufzeichnungsmedium die sublimierbare organische Substanz Kupferphthalozyanin Fluoreszein oder Bleiphthalozyanin, oder irgendeine Mischung daraus ist, wobei der Schmelzpunkt der Metallschicht (25) unterhalb des Schmelzpunktes des

6

**0 084 729**

strahlungsdurchlässigen anorganischen Materials der Unterschicht (22) und der Sublimationspunkt der Schicht (24) aus sublimierbarer organischer Substanz im Bereich von ±20% des Schmelzpunktes des Metalls der genannten Metallschicht (25) liegt.

9. Aufzeichnungselement nach Anspruch 8, bei dem das Substrat (21) aus synthetischem Harz besteht.

10. Aufzeichnungselement nach Anspruch 9, bei dem das synthetische Harz Polymethylmethacrylat oder Polycarbonat, Polyvinylchlorid oder Polystyrol ist.

11. Aufzeichnungselement nach Anspruch 8, 9 oder 10, bei dem das anorganische Material SiO, $SiO_2$, $MgF_2$, $Al_2O_3$ oder irgend eine Mischung daraus ist.

12. Aufzeichnungselement nach einem der Ansprüche 8 bis 11, bei dem die Dicke der Unterschicht (22) 3 nm oder mehr beträgt.

13. Aufzeichnungselement nach einem der Ansprüche 8 bis 12, bei dem die Dicke der Schicht (24) aus sublimierbarer organischer Substanz 5 nm oder mehr beträgt.

14. Aufzeichnungselement nach einem der Ansprüche 8 bis 13, bei dem die Dicke der ersten Metallschicht (25) 3 nm oder mehr beträgt.

15. Aufzeichnungselement nach einem der Ansprüche 8 bis 14, bei dem die Dicke der zweiten Metallschicht (23) 5 nm oder mehr beträgt.

**Revendications**

1. Un élément d'enregistrement approprié pour l'écriture et la lecture de l'information par irradiation par un faisceau lumineux d'une couche d'enregistrement, comprenant un substrat (11, 21) susceptible de transmettre un rayonnement, un milieu d'enregistrement comprenant au moins une couche métallique (14, 25) et une sous-couche (12, 22) susceptible de transmettre un rayonnement, et stratifiée entre ledit substrat (11, 21) et ladite couche métallique (14, 25), caractérisé en ce que ladite couche métallique (14, 25) consiste en l'un des métaux Te, Bi, In, Se, As, Pb, Sn ou un alliage ou un mélange quelconque de ces métaux, ladite sous-couche (12, 22) est composée d'une matière minérale susceptible de transmettre un rayonnement, et ledit milieu d'enregistrement comprend additionellement une couche (13, 24) de substance organique sublimable qui se trouve sous cette couche métallique (14, 25) et dans laquelle la substance organique sublimable est la phtalocyanine de cuivre, la fluorescéine ou la phtalocyanine de plomb, ou un mélange de celles-ci, le point de fusion de la couche métallique (14, 25) étant inférieure à celui de la matière minérale susceptible de transmettre un rayonnement de la sous-couche (12, 22) et le point de sublimation de la couche (13, 24) de substance organique sublimable étant compris dans l'intervalle de ±20% du point de fusion du métal de ladite couche métallique (14, 25).

2. Un élément d'enregistrement selon la revendication 1, selon lequel le substrat (11, 21) est composé d'une résine synthétique.

3. Un élément d'enregistrement selon la revendication 2, selon lequel la résine synthétique est du polyméthacrylate de méthyle, du polycarbonate, du chlorure de polyvinyle ou du polystyrène.

4. Un élément, d'enregistrement selon l'une quelconque des revendications précédentes, selon lequel la matière minérale est SiO, $SiO_2$, $MgF_2$, $Al_2O_3$, ou un mélange quelconque de celles-ci.

5. Un élément d'enregistrement selon l'une quelconque des revendications précédentes, selon lequel l'épaisseur de la sous-couche (12, 22) est de 3 nm ou plus.

6. Un élément d'enregistrement selon l'une quelconque des revendications précédentes, selon lequel l'épaisseur de la couche (13, 24) de substance organique sublimable est de 5 nm ou plus.

7. Un élément d'enregistrement selon l'une quelconque des revendications précédentes, selon lequel l'épaisseur de la couche métallique (14, 25) est de 5 nm ou plus.

8. Un élément d'enregistrement approprié pour l'écriture et la lecture de l'information par irradiation par un faisceau lumineux d'une couche d'enregistrement, comprenant un substrat (21) susceptible de transmettre un rayonnement, un milieu d'enregistrement comprenant au moins une couche métallique (25) et une sous-couche (22) susceptible de transmettre un rayonnement, et stratifiée entre ledit substrat (11, 21) et ladite couche métallique (14, 25), caractérisé en ce que ledit milieu d'enregistrement comprend additionellement une couche (24) de substance organique sublimable qui se trouve sous cette couche métallique (25) et une seconde couche métallique (23) stratifiée entre cette sous-couche (22) et cette couche (24) de substance organique sublimable, ladite couche métallique (25) et ladite seconde couche métallique (23) consistant chacune en l'un des métaux Te, Bi, In, Se, As, Pb, Sn ou un alliage ou un mélange quelconque de ces métaux, et cette sous-couche (22) étant composée d'une matière minérale susceptible de transmettre un rayonnement, dans ce milieu d'enregistrement la substance organique sublimable étant la phtalocyanine de cuivre, la fluorescéine ou la phtalocyanine de plomb ou un mélange de celles-ci, le point de fusion de la couche métallique (25) étant inférieure à celui de la matière minérale susceptible de transmettre un rayonnement de la sous-couche (22), et le point de sublimation de la couche (24) de substance organique sublimable étant compris dans l'intervalle de ±20% du point de fusion du métal de cette couche métallique (25).

9. Un élément d'enregistrement selon la revendication 8, selon lequel le substrat (21) est composé d'une résine synthétique.

10. Un élément d'enregistrement selon la revendication 9, selon lequel la résine synthétique est du polyméthacrylate de méthyle, du polycarbonate, du chlorure de polyvinyle ou du polystyrène.

7

11. Un élément d'enregistrement selon la revendication 8, 9 ou 10, selon lequel la matière minérale est SiO, SiO$_2$, MgF$_2$, Al$_2$O$_3$, ou un mélange quelconque de celles-ci.

12. Un élément d'enregistrement selon l'une quelconque des revendications 8 à 11, selon lequel l'épaisseur de la sous-couche (22) est de 3 nm ou plus.

13. Un élément d'enregistrement selon l'une quelconque des revendications 8 à 12, selon lequel l'épaisseur de la couche (24) de substance organique sublimable est de 5 nm ou plus.

14. Un élément d'enregistrement selon l'une quelconque des revendications 8 à 13, selon lequel l'épaisseur de la première couche métallique (25) est de 3 nm ou plus.

15. Un élément d'enregistrement selon l'une quelconque des revendications 8 à 14, selon lequel l'épaisseur de la seconde couche métallique (23) est de 5 nm ou plus.

# Fig. 1

10
14
13
12
11

# Fig. 2

20
25
24
23
22
21

# Fig. 3

# Fig. 4

(a)  43

(b)  43  42  41

# Fig. 5

(a)  56

(b)  56  55  54  53  52  51